(19)

Europäisches
Patentamt
European
Patent Office
Office européen
des brevets

(11) **EP 2 822 024 A2**

(12) **EUROPEAN PATENT APPLICATION**

(43) Date of publication:
**07.01.2015 Bulletin 2015/02**

(51) Int Cl.:
*H01J 61/36* (2006.01)  *H01J 5/24* (2006.01)
*H01J 61/82* (2006.01)  *H01J 9/26* (2006.01)

(21) Application number: **14175394.7**

(22) Date of filing: **02.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.07.2013 IN CH29572013**

(71) Applicant: **General Electric Company
Schenectady, New York 12345 (US)**

(72) Inventors:
• **Kumar, Sundeep**
**560066 Bangalore (IN)**

• **Nagesh, Mamatha**
**577204 Shimoga (IN)**
• **Ramaiah, Raghu**
**Cleveland, OH 44112 (US)**

(74) Representative: **Illingworth-Law, William
Illingworth et al
Global Patent Operation - Europe
GE International Inc.
The Ark
201 Talgarth Road
Hammersmith
London W6 8BJ (GB)**

(54) **Ceramic discharge lamp hermetically sealed by brazing**

(57) A discharge lamp 100 is presented. The lamp 100 includes an arc envelope 102 defining a chamber 104 and a first opening 106. A plug 116 is positioned in the first opening 106 through a first seal 110. The lamp 100 further includes a dosing tube 134 extending away from the chamber 104, and having a passageway 136 extending into the chamber 104 through a second opening 138 in the arc envelope 102. The dosing tube 134 is coupled to the arc envelope 102 via a second seal 140. The first seal 110, the second seal 140, or both seals include a braze material having an active metal element in an amount ranging from about 0.1 weight percent to about 10 weight percent, based on the total weight of the braze material.

FIG. 1

## Description

The invention disclosed relates generally to lighting systems, and more particularly to high intensity discharge lamps. Specifically, the invention relates to a ceramic discharge lamp, such as a metal halide lamp, with improved sealing characteristics.

Ceramic metal halide (CMH) lamps (sometimes referred to as ceramic discharge metal halide lamps) generally include a ceramic lamp body or arc tube that forms a chamber into which a dose material e.g., mercury, argon, and halide salts are introduced. Electrodes are positioned at one or more ends of the tube that, when energized, will cause the lamp to emit light. Depending upon the mixture of halide salts, the emitted light can closely resemble natural daylight. Additionally, for a comparable light output, CMH lamps can be operated with significantly less energy than a traditional, incandescent light bulb. Also, unlike lamps constructed with fused quartz, the ceramic (for example, alumina) is less subject to attack from metal ions inside the tube.

A conventional construction for CMH lamps has used e.g., the ceramic tube sealed to one or more end-structures or plugs. A dosing tube is usually provided to introduce the dose material into the ceramic tube. The process of joining various components for sealing these lamps has significant challenges. A seal glass is often used for the purpose. The sealing usually involves heating the assembly of the joining components (for example ceramic tube, and the end-structures), and the seal glass to induce melting of the seal glass and reaction with the ceramic components to form a strong bond. The various components of the lamp are often made of the same material, such as polycrystalline alumina (PCA), or different materials because of operational limitations. In either case, various stresses may arise due to the sealing process, the geometry of the interface of the joined components, and the material used for the components. For example, the component materials may have different mechanical and physical properties, such as different coefficient of thermal expansion (CTE), and elastic properties, which can lead to residual stresses and cracks at the sealing. Furthermore, certain components' materials used to provide favorable and reliable stress distribution in the ceramic at the sealing interface, may not be chemically resistant to various species that is used in the lamps, especially at elevated temperatures.

In addition to various components and materials discussed above, these CMH lamps also include a variety of internal materials (for example, luminous gases) and electrodes to create the desired high intensity discharge for lighting. The particular internal materials disposed in the ceramic discharge lamps can affect the sealing characteristics, the emission characteristics, and the type of materials that may be workable for the lamp components and the sealing. For example, certain internal materials, such as halides may be desirable for lighting characteristics, but they are corrosive to some of the ceramic or metallic components, and the sealing material.

Therefore, there remains a need for a discharge lamp, such as CMH lamp with improved sealing characteristics, and having a construction that lacks the above described deficiencies.

Embodiments of the invention are directed towards a discharge lamp sealed via a braze material.

In one embodiment, a discharge lamp is provided. The lamp includes an arc envelope defining a chamber and a first opening. A plug is positioned in the first opening through a first seal. The lamp further includes a dosing tube extending away from the chamber, and having a passageway extending into the chamber through a second opening in the arc envelope. The dosing tube is coupled to the arc envelope via a second seal. The first seal, the second seal, or both seals include a braze material having an active metal element. The braze material includes the active metal element in an amount ranging from about 0.1 weight percent to about 10 weight percent, based on the total weight of the braze material.

These and other features, aspects, and advantages of the present invention will become better understood when the following detailed description is read with reference to the accompanying drawings in which like characters represent like parts throughout the drawings, wherein:

FIG. 1 illustrates a cross-sectional view of a discharge lamp, according to one embodiment of the invention.

FIG. 2 illustrates a cross-sectional view of a discharge lamp, according to another embodiment of the invention.

FIG. 3 illustrates a cross-sectional view of a discharge lamp, according to yet another embodiment of the invention.

FIG. 4 illustrates a cross-sectional view of a single ended discharge lamp, according to yet another embodiment of the invention.

The invention includes embodiments that relate to a high intensity discharge lamp, for example a ceramic metal halide lamp (CMH). As discussed in detail below, some of the embodiments of the present invention provide a discharge lamp having a seal (also referred to as a joint) comprising a braze material that includes an active metal element. The active metal element present in the braze material (or braze alloy) promotes wetting of a ceramic surface, and enhances the capability of providing a seal. The resulting braze seal or joint provides a hermetic seal. Furthermore, these braze materials including an active metal element, for example titanium, and the seals thereof usually have high thermochemical stability against corrosive environment of a CMH lamp at elevated temperatures. In addition, brazing provides simple and easy processing during construction and sealing of the lamp.

Approximating language, as used herein throughout the specification and claims, may be applied to modify any quantitative representation that could permissibly vary without resulting in a change in the basic function to which it is related. Accordingly, a value modified by a term or terms, such as "about", is not limited to the precise value specified. In some instances, the approximating language may correspond to the precision of an instrument for measuring the value.

In the following specification and the claims, the singular forms "a", "an" and "the" include plural referents unless the context clearly dictates otherwise. The terms "comprising," "including," and "having" are intended to be inclusive and mean that there may be additional elements other than the listed elements. As used herein, the term "and/or" includes any and all combinations of one or more of the associated listed items.

The terms "first," "second," and the like, herein do not denote any order, quantity, or importance, but rather are used to distinguish one element from another.

"Sealing" is a function performed by a structure that joins other structures together, to reduce or prevent leakage through the joint between the other structures. The seal structure may also be referred to as a "seal" herein, for the sake of simplicity.

Typically, "brazing" uses a braze material (usually an alloy) having a lower liquidus temperature than the melting points of the components (i.e. their materials) to be joined. The braze material is brought slightly above its melting (or liquidus) temperature while protected by a suitable atmosphere. The braze material then flows over the components (known as wetting), and is then cooled to join the components together. As used herein, "braze alloy composition" or "braze alloy" or "braze material" or "brazing alloy", refers to a composition that has the ability to wet the components to be joined, and to seal them. A braze alloy, for a particular application, should withstand the service conditions required, and melts at a lower temperature than the base materials; or melts at a very specific temperature.

According to most embodiments of the invention, the discharge lamp includes an arc envelope defining a chamber and a first opening, a plug positioned in the first opening through a first seal. The lamp further includes a dosing tube extending away from the chamber, and has a passageway extending into the chamber through a second opening in the arc envelope. The dosing tube is coupled to the arc envelope via a second seal. The first seal, the second seal, or both seals comprise a braze material that comprises an active metal element.

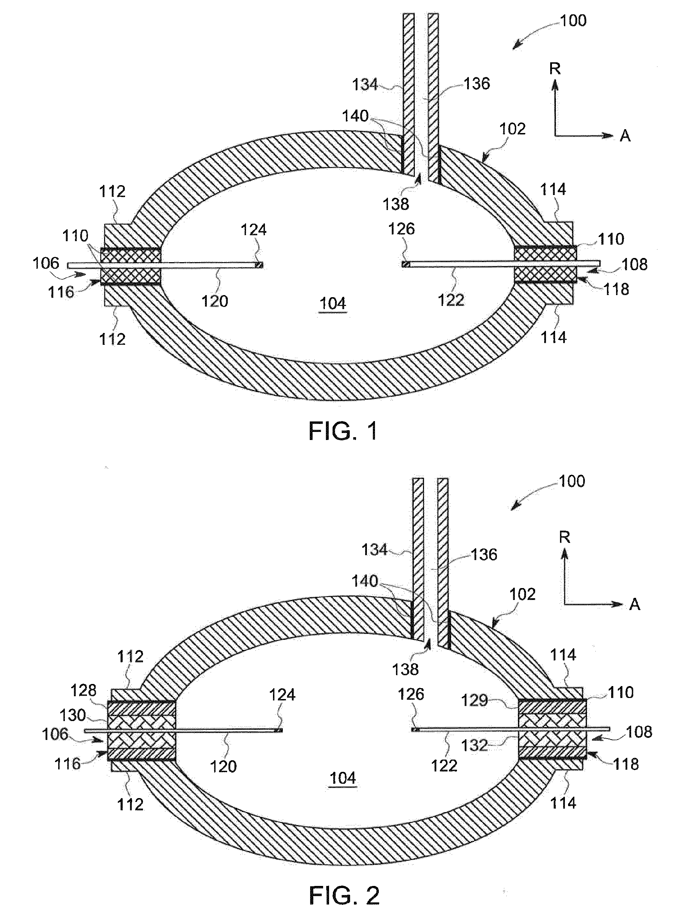

Although the present design or technique is applicable to a wide variety of lighting systems, the unique features discussed above are described with reference to several exemplary discharge lamps illustrated in FIGS. 1-4. FIGS. 1-2 depict cross-sectional side views of a discharge lamp 100 according to some embodiments of the invention. The lamp 100 includes an arc envelope 102 defining a chamber 104 into which various materials have been introduced such as mercury, a metal halide salt, and an inert gas. The arc envelope 102 also defines a pair of openings 106 and 108 spaced apart from each other along the axial direction A and positioned on opposing sides of chamber 104 as best seen in the cross-sectional views of the envelope 102 provided in FIGS. 1-2.

The envelope 102 may include a ceramic material that, upon sintering, will become translucent or transparent such that light may be emitted from chamber 104. Suitable examples of the ceramic material may include yttrium aluminum garnet, yttria, ytterbia, alumina, sapphire, spinel, or a combination thereof. In certain instances, the envelope 102 may include common materials for the lamp body, for example polycrystalline alumina. Regarding the geometry of the lamp 100, the envelope 102 may have any suitable hollow transparent body. FIGS. 1-2 illustrate embodiments having a generally round (for example, oval, spherical, oblong, etc.) hollow body or arc envelope 102. Other examples may include a cylindrical shape with a circular or polygonal cross section, a bulb shape, etc.

A pair of plugs 116 and 118 is positioned into the openings 106 and 108, respectively, of the envelope 102. The plugs 116 and 118 are sealed to the arc envelope 102 via a first seal 110. For these embodiments as illustrated in FIGS. 1-2, the openings 106 and 108 are provided by legs 112 and 114 that are connected to body 102 and extend away from chamber 104. The plugs 116 and 118 are sealed to the arc envelope 102 at the legs 112 and 114 via the first seal 110.

A variety of materials may be used to form the plugs 116 and 118, which are thermo-chemically stable and resistant to corrosion (for example, halide resistant). In one instance, the plugs 116 and 118 include a metal. Non limiting examples of suitable metals may include niobium, molybdenum, or a combination thereof. An alloy of molybdenum-rhenium (described below) may be advantageous in some instances. In some instances, a cermet, i.e. a mixture of a ceramic material and an electrically-conductive metal may be desirable because a cermet may be engineered with a good CTE (coefficient of thermal expansion) match with the ceramic envelope 102, and also may have good resistance to halide vapors. Some examples of the cermet may include molybdenum-zirconia, molybdenum-alumina, etc.

The lamp 100 further includes a pair of electrodes 120 and 122 inserted in the plugs 116 and 118, respectively. The electrodes 120 and 122 each include a tip 124 and 126, respectively, that extends into chamber 104. In some instances, the tips 124 and 126 may include overwraps or coils wrapped around the circumference and along the length of the tips. These overwraps or coils may act as heat sinks and absorb the heat from the electrode tips, and dissipate the heat into the surroundings. A variety of materials may be used for the electrodes.

For example, each electrode 120 and 122 may be a single wire lead (as shown) or may be wrapped within coils formed by another wire lead. Suitable materials for the construction of the electrodes 120 and 122 may include tungsten, molybdenum, rhenium, tantalum and other refractory materials. In some instances, electrodes may be constructed of tungsten with molybdenum section welded together, or tungsten with a cermet section.

In some embodiments, as depicted in FIG. 2, the plug 116 includes a core 130 positioned within an annular outer layer 128. For this exemplary embodiment, annular outer layer 128 is positioned radially outward (radial direction denoted by arrow R) of core 130 as illustrated in FIG. 2. By way of example, annular outer layer 128 may include aluminum oxide, yittrium oxide, magnesium aluminate, aluminum oxy-nitride, or the like. Although shown as circular or annular, outer layer 128 may be constructed from other shapes as well.

The core 130 may include a cermet. A cermet may have good CTE match with the arc envelope material. For example, the core 130 may include a mixture of aluminum oxide and molybdenum; other compositions may also be used. In some instances, the core 130 may contain relatively homogenous material, and have a relatively uniform coefficient of thermal expansion throughout the core. In some other instances, the plug 116 may include a graded core, for example the core may include a plurality of layers positioned radially. The layers may have different coefficient of thermal expansion. The graded core may be advantageous in minimizing the effects of thermal expansion when the core, the outer layer, and the envelope are heated during use of the lamp. These layers with different thicknesses and/or shapes may be used for the core. The plug 118, including a core 132 and an annular outer layer 129 may be constructed in a similar manner. A pair of electrodes 120 and 122 is positioned in cores 130 and 132.

Usually, the core and the annular layer are constructed by pressing powders and sintering them. In some instances, the core and the annular layer can be extruded into the desired shapes. The cermet core and the annular ceramic layer may have their sintered densities. In one embodiment, the sintered density of the outer layer of ceramic material, $\rho_{SOD}$, may be greater than, or equal to, the sintered density of the cermet core, $\rho_{SCD}$. Stated mathematically, $\rho_{SOD} \geq \rho_{SCD}$. Another embodiment may provide following inequality

$$\frac{\text{Sintered Cermet Density}}{\text{Sintered Ceramic Density}} \geq 0.5$$

or ($\rho_{SCD} / \rho_{SOD}$) is greater than, or equal to about 0.5, but less than 2

Without being bound by any theory, the core and the annular layer that meet the above inequality may create low stresses in the interface of the cermet core and the ceramic outer layer of the plug, and provide cracks-free plug.

Each electrode 120 and 122 has an electrode diameter along radial direction R. Each core 130 and 132 also has a core diameter along radial direction R. In one exemplary embodiment of the invention, the core diameter is less than about 10 times the electrode diameter. Other ratios may also be used.

As stated previously, the plugs 116 and 118 are positioned in the openings 106 and 108. The plugs 116 and 118 can each be provided with features for accurately controlling the amount by which plugs 116 and 118 extend into legs 112 and 114, respectively, to close openings 106 and 108. Several such features, dimensions, and parameters are described in an earlier filed U.S. Patent Application Serial No. 13/723568 filed on 21 December 2012.

In some instances, one of the openings 106 or 108 may include a conventional injection molded part. For example, a plug 116 is positioned at the opening 106. The plug 116 may have the outer layer and the core as previously described. However, opposite to the plug 116, the lamp includes an injection molded part at the other end opening 108. The injection molded part includes a hole or passage for receipt of an electrode that can be sealed in for example, a conventional manner using a sealing frit.

Referring again to FIGS. 1-2, the lamp 100 further includes a dosing tube 134 coupled to the envelope 102. The openings 122 and 124 are generally plugged and hermetically sealed, and the chamber 104 is often dosed through the dosing tube 134. The dosing tube 134 extends away from the chamber 104, and defines a passageway 136 by which dosing materials may be introduced into the chamber 104. The passageway 136 extends into the chamber 104 through a second opening 138. During construction of the lamp 100, the dosing tube 134 is often manufactured separately, and then joined to the arc envelope 102 at the second opening 138. In some embodiments, the dosing tube 134 is joined to the envelope 102 via a second seal 140. In some instances, after the chamber 104 is properly dosed, the dosing tube 134 can be sealed and removed by, for example, sealing with plasma torch and cutting. Other techniques may be used as well.

As used herein, each of the terms "plug" and "dosing tube" is meant to comprise a metal, a ceramic material, or a combination thereof, and may be of a circular or polygonal shape, and in general, all shapes that are compatible with a particular lamp design.

Regarding the material, the dosing tube 134 may include a variety of materials, which are thermochemically stable and resistant to corrosive dosing materials. In some embodiments, the dosing tube 134 includes a ceramic material. Non limiting examples of suitable ceramic materials may include alumina, yttrium aluminum garnet, yttria, sapphire, spinel, or a combination thereof. In certain embodiments, the dosing tube includes polycrystalline alumina (PCA). In some embodiments, the dosing tube may include a metal such as molybdenum, rhenium, niobium, or a combination thereof. In some embodiments, a cermet may be also be used. Some examples of the cermet may include molybdenum-zirconia, molybdenum-alumina, etc.

In certain embodiments, the dosing tube 134 includes an alloy of molybdenum and rhenium as discussed in U.S. Patent Application Publication No. 2007/0001610. The alloy may be desirable because of being resistant to corrosive dosing materials as well as sufficiently ductile to allow sealing of the tube (after the material being dosed) via crimping, welding, or any other suitable technique followed removal of the tube by, for example cutting. In some instances, the concentration of rhenium in the alloy may be in a range from about 10 percent to about 55 percent by weight. In certain instances, the rhenium concentration may be in a range from about 30 percent to about 50 percent by weight. Other suitable examples for the dosing tube 134 may include niobium, tantalum, molybdenum, or iridium.

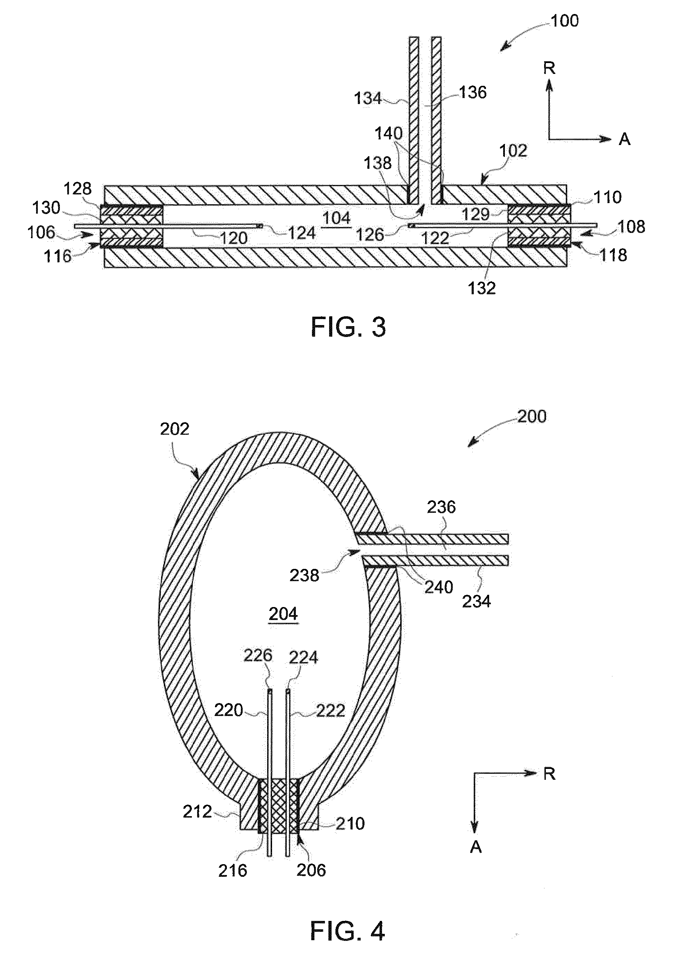

FIG. 3 illustrates another embodiment of a lamp having different shape from the embodiments shown in FIGS 1-2. The arc envelope 102, as depicted in FIG.3, is cylindrical along the axial direction A and lacks legs. Such a cylindrical envelope 102 may have the advantage of ease of manufacture. For example, an outer wall of the plug 116 is in direct contact with an inner wall of the envelope 102. The construction of the lamp 100 is otherwise similar to the embodiments shown in FIGS. 1-2 with like reference numerals indicating the same or similar features. The plug 112 is sealed to the arc envelope via the first seal 110 and the dosing tube 134 is joined to the arc envelope 102 via the second seal 140. As mentioned previously, the dosing tube 134 may be sealed and removed after the chamber 104 is dosed.

FIG. 4 depicts a cross sectional side view of an alternative lamp 200, in some embodiments, which has a single plug 216 inserted in an opening 206 of an arc envelope 202. The opening 206 has a leg 212 that is connected to the envelope 202 and extends away from a chamber 204. As described above for other embodiments, the plug 216 is sealed to the arc envelope 202 at the leg 212 via a first seal 210. The illustrated lamp 200 also includes two electrodes 220 and 222 positioned in the single plug 216. Each electrode 220 and 222 include tips 224 and 226, respectively, that extend into the chamber 204 defined by the arc envelope 202. Similar to the lamp 100 illustrated in FIGS. 1 and 2, the lamp 200 also includes a dosing tube 234 joined/coupled to the arc envelope 202 at a second opening 238 via a second seal 240.

Other shapes of the arc envelope other than as shown in FIGS. 1-4 may be used as well. While a variety of shapes may be used for the lamp or the arc envelope, the shapes and dimensions described in U.S. Patent Application Serial No. 13/723568 are particularly effective for the light transmission as well as manufacture of the lamp. Moreover, the shape and size of the several other components discussed above with reference to FIGS. 1-4 are only illustrative for the understanding of the lamp structure; and are not meant to limit the scope of the invention. The exact position of the seals and the joined components can vary to some degree.

Although most of the embodiments show a dosing port attached to the arc envelope through a second opening, however positioning of a dosing port through a plug also lies within the scope of the invention.

Referring again to FIGS. 1-2, the first seal 110, the second seal 140, or both include a braze material that includes an active metal element. An "active metal element", as used herein, refers to a reactive metal that has high affinity to the oxygen within the ceramic, and thereby reacts with the ceramic. A braze alloy containing an active metal element can also be referred to as an "active braze alloy" and the corresponding technique may be referred to as "active brazing." Active brazing is a technique often used to join a ceramic to a metal, or a ceramic to a ceramic. The active metal element undergoes a reaction with the ceramic, when the braze alloy is in a molten state, and leads to the formation of a thin reaction layer on the interface of the ceramic and the braze alloy. The thin reaction layer allows the braze alloy to wet the ceramic surface, resulting in the formation of a ceramic-ceramic or a ceramic-metal joint/bond, which may also be referred to as "active braze seal."

In some embodiments, the braze alloy includes a nickel-based alloy, that is the alloy contains a relatively high amount of nickel, as compared to the amount of other elements in the alloy. Nickel is relatively inert in a corrosive environment, as compared to other known base metals, e.g. copper, iron, chromium, cobalt, etc. Additionally, nickel may enhance other properties of the braze alloy, such as the thermal expansion coefficient, and the phase stability. In general, the amount of nickel balances the alloy based on the amounts of the other constituents. In some embodiments of this invention, a suitable level for the amount of nickel may be at least about 50 weight percent, based on the total weight of the braze alloy. In some embodiments, nickel is present in an amount greater than about 60 weight percent. In some embodiments, nickel may be present from about 75 weight percent to about 95 weight percent, based on the total weight of the braze alloy

A variety of suitable active metal elements may be used to form the active braze alloy. The selection of a suitable active metal element mainly depends on the chemical reaction with the ceramic (e.g., alumina) to form a uniform and continuous reaction layer, and the capability of the active metal element of forming an alloy with a base element (e.g. nickel). The active metal element for embodiments herein is often titanium. Other suitable examples of the active metal element include, but are not limited to, zirconium, hafnium, and vanadium. A combination of two or more active metal elements may also be used.

The presence and the amount of the active metal may influence the thickness and the quality of the thin reaction layer, which contributes to the wettability or flowability of the braze alloy, and therefore, the bond strength of the resulting joint. In some embodiments, the active metal element is present in an amount ranging from about 0.1 weight percent to about 10 weight percent, based on the total weight of the braze alloy. A suitable range is often from about 1 weight percent to about 6 weight percent. The active metal element is generally present in small amounts suitable for improving the wetting of the ceramic surface, and forming the thin reaction layer, for example, less than about 10 microns. A high amount (for example, greater than about 20 weight percent) of the active metal layer may cause or accelerate halide corrosion.

The braze alloy composition may further include at least one additional element. The additional element may provide adjustments in several required properties of the braze alloy, for example, the coefficient of thermal expansion, liquidus temperature, brazing temperature, corrosion resistance, and the strength of the braze alloy. In one embodiment, the additional element can include, but is not limited to, iron, chromium, cobalt, gold, niobium, molybdenum, tungsten, or a combination thereof. In some specific embodiments, the braze alloy includes molybdenum. With respect to the amount, the braze alloy includes up to about 10 weight percent (e.g., about 0.1%-10%) of the additional elements, based on the total weight of the braze alloy. In some embodiments, the braze alloy includes from about 0.1 weight percent to about 5 weight percent of molybdenum, based on the total weight of the braze alloy. Some examples of the braze alloy may include Ni-10Ti, Ni-6Ti, and Ni-Au-Mo-V (82.0% Au, 15.5% Ni, 1.75% V, 0.75% Mo) (all percentages are by weight).

For joining two components or sealing the lamp, the braze alloy may be introduced between the components. For example, referring to FIGS. 1-2, the alloy may be disposed at the second opening 136 between the arc envelope 102 and a portion of the dosing tube 134 to join the dosing tube via the joint or seal 140. Similarly, the alloy may be disposed between the leg 104 and the plug 116 to form the first seal 110.

In some instances, a layer of the braze alloy may be applied at least one surface of a component or both components to be joined. The thickness of the alloy layer may be in a range between about 5 microns and about 100 microns. The layer may be deposited or applied on one or both of the surfaces to be joined, by any suitable technique, e.g. by a printing process or other dispensing processes. In some instances, a foil, wire, or a preform may be suitably positioned for bonding the surfaces to be joined. The whole assembly (or a brazing structure) is, then, usually heated at a brazing temperature (for example, 1500 degrees Celsius); the braze alloy melts and flows over the surfaces. The heating can be undertaken in a controlled atmosphere, such as ultrahigh pure argon, hydrogen and argon, ultra-high pure helium; or in a vacuum. To achieve good flow and wetting of the surfaces, the assembly is often held at the brazing temperature for a few minutes after melting of the braze alloy, this period may be referred to as the "brazing time". During the process, a load can also be applied.

During brazing, the alloy melts and the active metal element (or elements) present in the melt reacts with the ceramic and forms a thin reaction layer at the interface of the ceramic surface and the braze alloy, as described previously. The thickness of the reaction layer may range from about 0.1 micron to about 2 microns, depending on the amount of the active metal element available to react with the ceramic, and depending on the surface properties of the ceramic component. In a typical sequence, the brazing structure is then subsequently cooled to room temperature; with a resulting, active braze hermetic seal or joint between the two components. In some instances, rapid cooling of the brazing structure is permitted.

In some embodiments, the first seal 110 and the second seal 140 include the active braze seal as discussed above. In some other embodiments, the second seal 140 may include the active braze seal, while the first seal 110 may include a seal or a joint achieved using other sealing techniques. Some examples of other sealing techniques may include co-sintering, diffusion bonding, welding (for example, laser welding), crimping, or any other suitable technique.

In some instances, the cores 130 and 132 may be brazed with the annular layers 128 and 129, and also with the electrodes 120 and 122 to form a hermetic seal around the electrodes 120 and 122, and eliminate and prevent voids and crevices that could cause lamp failure. In some other instances, other sealing techniques may be used, as discussed above.

Embodiments of the present invention may advantageously provide a highly reliable hermetic seal. The braze seal retains the materials dosed into the lamp chamber while minimizing or eliminating voids and other crevices, and is compositionally and chemically stable in the corrosive environment of the lamp. The active braze alloys have substantially no chemical reactivity to the halides commonly used in the CMH lamp at the lamp operating temperatures (usually ranges from about 1200 degrees Celsius to about 1700 degrees Celsius), and thus, the resulting braze seals are highly resistive to halide corrosion. For example, thermodynamic calculations were done for nickel iodide and titanium iodide using MTDATA software, and existing database for Gibbs free energy, which confirmed no reactivity of Ni or Ti with a halide (for example, iodide) present in the lamp.

Moreover, because of enhanced reliability of the braze joints, the legs (for example 112 and 114 in Fig. 1) of the lamp may be shortened as compared to the conventional lamps. In other words, miniaturization of the lamp may be possible with the braze seals/joints. In some instances, the length of the overall lamp may be reduced by about 20 percent to about 50 percent by reducing the length of the legs.

Thus, the sealing of the lamp and/or joining of the dosing tube to the lamp (as discussed above) by active brazing simplifies the overall lamp-assembly process, enables miniaturizing opportunities, and improves the reliability and performance of the lamp. The present invention provides advantages to leverage a relatively inexpensive, simple, and rapid process to hermetically seal and manufacture the lamp, as compared to currently available methods.

During construction, the lamp 100 or 200 is often subjected to high temperature in a controlled atmosphere. More particularly, for example, during brazing or sintering, the parts are heated to a high temperature (e.g., ~ 1500 °C) in the presence of a specifically selected gas such as e.g., hydrogen or inert gas. The heating may lead to grain growth between various particles used to make various components, for example plugs 116 and 118. It may also cause for example, the cores 130 and 132 to contract along all radial directions R to form a hermetic seal around electrodes 120 and 122. In addition, under such conditions, co-sintering may occur. For example, cores 130 and 132 may be co-sintered with annular outer layers 126 and 128. In such co-sintering, diffusion between these parts provides for grain growth that also helps form the hermetic seal.

Additionally, for certain exemplary embodiments, the outer annular layers 128 and 129 of plugs 116 and 118 include aluminum oxide. During heating at high temperature, these materials will become transparent or translucent to provide lamp 100 with certain advantageous characteristics. For example, unlike a plug constructed from an opaque material, plugs 116 and 118 may allow light to pass through - increasing the light output from lamp 100. Also, by allowing more energy to escape in the form of light, a thermal benefit is provided as less heat must be dissipated from lamp 100. For this exemplary embodiment, providing a cermet core diameter that is smaller than the outer layer diameter provides a unique advantage for allowing more energy to escape in the form of light. In some instances, the plugs may form an hourglass shape as described in U.S. Patent Application Serial No. 13/723568. The hourglass shape may provide a crack free plug by using low stress design for the plug.

While only certain features of the invention have been illustrated and described herein, many modifications and changes will occur to those skilled in the art. It is, therefore, to be understood that the appended claims are intended to cover all such modifications and changes as fall within the scope of the invention as defined therein. Furthermore, all of the patents, patent applications, articles, and texts which are mentioned above are incorporated herein by reference.

Various aspects and embodiments of the present invention are defined by the following numbered clauses:

1. A discharge lamp, comprising:

an arc envelope defining a chamber and a first opening;

a plug positioned in the first opening through a first seal, and

a dosing tube extending away from the chamber, and having a passageway extending into the chamber through a second opening in the arc envelope, and coupled to the arc envelope via a second seal;

wherein the first seal, the second seal, or both seals comprise a braze material comprising an active metal element in an amount ranging from about 0.1 weight percent to about 10 weight percent, based on the total amount of the braze material.

2. The discharge lamp of clause 1, wherein the arc envelope comprises polycrystalline alumina, yttrium aluminum garnet, yttria, sapphire, spinel, or a combination thereof.

3. The discharge lamp of any preceding clause, wherein the plug comprises polycrystalline alumina, yttrium aluminum garnet, yttria, sapphire, spinel, or a combination thereof.

4. The discharge lamp of any preceding clause, wherein the plug comprises an outer layer disposed on a core.

5. The discharge lamp of any preceding clause, wherein the core comprises a cermet.

6. The discharge lamp of any preceding clause, wherein the outer layer comprises aluminum oxide.

7. The discharge lamp of any preceding clause, wherein the outer layer has a sintered density $\rho_{SOD}$ and the core has a sintered density $\rho_{SCD}$, wherein $\rho_{SOD} < \rho_{SCD}$.

8. The discharge lamp of any preceding clause, wherein the ratio $\rho_{SOD} / \rho_{SCD}$ is greater than or equal to about 0.5.

9. The discharge lamp of any preceding clause, wherein the plug defines a radial direction, and the core of the plug comprises multiple layers along the radial direction, each layer having a different coefficient of thermal expansion.

10. The discharge lamp of any preceding clause, further comprising a pair of electrodes extending into the chamber through the plug.

11. The discharge lamp of any preceding clause, wherein the arc envelope has at least two openings spaced apart from each other at opposing sides of the chamber, and a pair of plugs, each positioned in one of the openings at opposing sides of the chamber.

12. The discharge lamp of any preceding clause, wherein the dosing tube comprises polycrystalline alumina, yttrium aluminum garnet, yttria, sapphire, spinel, or a combination thereof.

13. The discharge lamp of any preceding clause, wherein the dosing tube comprises molybdenum, rhenium, niobium, or an alloy thereof.

14. The discharge lamp of any preceding clause, wherein the dosing tube comprises a molybdenum-rhenium alloy.

15. The discharge lamp of any preceding clause, wherein a concentration of rhenium in the alloy is in a range from about 10 weight percent to about 55 weight percent, based on the total weight of the alloy.

16. The discharge lamp of any preceding clause, wherein the dosing tube comprises a molybdenum-zirconia cermet.

17. The discharge lamp of any preceding clause, wherein the braze material comprises a nickel-containing alloy.

18. The discharge lamp of any preceding clause, wherein the alloy comprises at least about 50 weight percent nickel, based on the total weight of the alloy.

19. The discharge lamp of any preceding clause, wherein the active metal element comprises titanium, zirconium, hafnium, vanadium, or a combination thereof

20. The discharge lamp of any preceding clause, wherein the braze material comprises from about 1 weight percent to about 6 weight percent active metal element, based on the total weight of the braze material.

**Claims**

1. A discharge lamp (100), comprising:

    an arc envelope (102) defining a chamber (104) and a first opening (106);
    a plug (116) positioned in the first opening (106) through a first seal (110), and
    a dosing tube (134) extending away from the chamber (104), and having a passageway (136) extending into the chamber (104) through a second opening (138) in the arc envelope (102), and coupled to the arc envelope (102) via a second seal (140);
    wherein the first seal (110), the second seal (140), or both seals comprise a braze material comprising an active metal element in an amount ranging from about 0.1 weight percent to about 10 weight percent, based on the total amount of the braze material.

2. The discharge lamp of claim 1, wherein the arc envelope (102) comprises polycrystalline alumina, yttrium aluminum garnet, yttria, sapphire, spinel, or a combination thereof.

3. The discharge lamp of claim 1 or claim 2, wherein the plug (116) comprises polycrystalline alumina, yttrium aluminum garnet, yttria, sapphire, spinel, or a combination thereof.

4. The discharge lamp of claim 1, 2 or 3, wherein the plug (116) comprises an outer layer (128) disposed on a core (130).

5. The discharge lamp of claim 4, wherein the core (130) comprises a cermet, and/or the outer layer (128) comprises aluminum oxide.

6. The discharge lamp of claim 4 or claim 5, wherein the outer layer (128) has a sintered density $\rho_{SOD}$ and the core has a sintered density $\rho_{SCD}$, wherein $\rho_{SOD} < \rho_{SCD}$, wherein, preferably, the ratio $\rho_{SOD} / \rho_{SCD}$ is greater than or equal to about 0.5.

7. The discharge lamp of claim 4, 5 or 6, wherein the plug (116) defines a radial direction, and the core (130) of the plug (116) comprises multiple layers along the radial direction, each layer having a different coefficient of thermal expansion.

8. The discharge lamp of any preceding claim, further comprising a pair of electrodes (120, 122) extending into the chamber (104) through the plug (116).

9. The discharge lamp of any preceding claim, wherein the arc envelope (102) has at least two openings (106, 108) spaced apart from each other at opposing sides of the chamber (104), and a pair of plugs (160, 118), each positioned in one of the openings (106, 108) at opposing sides of the chamber (104).

10. The discharge lamp of any preceding claim, wherein the dosing tube (134) comprises polycrystalline alumina, yttrium aluminum garnet, yttria, sapphire, spinel, or a combination thereof.

11. The discharge lamp of any preceding claim, wherein the dosing tube (134) comprises molybdenum, rhenium, niobium, or an alloy thereof.

12. The discharge lamp of claim 13, wherein the dosing tube (134) comprises a molybdenum-rhenium alloy, wherein, preferably, a concentration of rhenium in the alloy is in a range from about 10 weight percent to about 55 weight percent, based on the total weight of the alloy.

13. The discharge lamp of any preceding claim, wherein the dosing tube (134) comprises a molybdenum-zirconia cermet.

14. The discharge lamp of any preceding claim, wherein the braze material comprises a nickel-containing alloy, wherein, preferably, the alloy comprises at least about 50 weight percent nickel, based on the total weight of the alloy.

15. The discharge lamp of any preceding claim, wherein:

the active metal element comprises titanium, zirconium, hafnium, vanadium, or a combination thereof, and/or
the braze material comprises from about 1 weight percent to about 6 weight percent active metal element, based on the total weight of the braze material.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 72356812 A
- US 20070001610 A
- US 723568 A